# EUROPEAN PATENT SPECIFICATION

(11) **EP 3 068 112 B1**
(45) Date of publication and mention of the grant of the patent: **23.05.2018**
(21) Application number: 15158591.6
(22) Date of filing: 11.03.2015
(51) Int. Cl.: H04L 29/12

(54) **SYSTEM AND METHOD FOR MAC ADDRESS ACQUISITION**
SYSTEM UND VERFAHREN FÜR MAC-ADRESSERFASSUNG
SYSTÈME ET PROCÉDÉ D'ACQUISITION D'ADRESSE MAC

(43) Date of publication of application: 14.09.2016
(73) Proprietor: Advanced Digital Broadcast S.A., 1262 Eysins (CH)
(72) Inventor: Dabrowski, Bartosz, 65-119 Zielona Gora (PL)
(74) Representative: Blonski, Pawel

(56) References cited:
- WO-A1-2009/147050
- US-A1- 2014 025 842

## Description

The present invention relates to a system and method for MAC address acquisition. In particular the present invention relates to overcoming a problem of IP (OSI Network layer) addressing on devices that need to exist and communicate inside an OSI network but are still presented without a MAC address (media access control address).

The present invention relates mainly to Internet Protocol (IP) based computer networks (e.g. The Internet). It is inherent to such networks that each and every entity connected to such network, must have an address assigned, in order to receive dedicated communication and transmit communication. Moreover, the address needs to be unique in order to ensure consistency of the entire computer network.

The present invention relates also to the existing Open Source Interconnection (OSI) layered model (or similar) used commonly in existing computer networks. In such model, the addressing, mentioned in the previous paragraph, is performed in the Network Data Link (2) layer. It is important that this addressing is required, or in some possible cases preferred, for the whole addressing model to operate consistently.

The aforementioned addressing, inherent to the aforementioned OSI model, is usually realized by a MAC address, e.g. in IEEE 802 local area networks. The MAC address is a 48bit data set that identifies a given device in the network in an unambiguous manner. However, due to its fixed definition, the MAC address space is still limited.

The present invention relates also to the growing ever more popular concept of the Internet of Things (IoT), which may in the future exhaust this address space very quickly. Hence, it may be needed e.g. to encapsulate groups of devices into closed networks managing MAC addressing in a different manner then the rest of the network.

Prior art presents many different solutions towards ensuring the uniqueness of the addressing on OSI Network Data Link (2) layer. These solutions include a static (and preferably controlled) assignment of MAC or IP addresses (for Network layer), BOOTP protocol or DHCP protocol or methods of generating MAC address in place on the device.

Prior inventions point to a number of techniques attempting at an automatic generation of MAC address. For example, the publication US 7,411,952 B2 describes a method of initialization of an address of a device newly connected to a network of an existing structure. The publication US 7,411,952 B2 allows for initialization for a MAC address of an entity based on queries and responses from the existing network. However, such method may prove unreliable in e.g. wireless networks where it might be impossible to determine the reliability of reception of all responses described in the publication US 7,411,952 B2. The present invention attempts to remove said unreliability.

Another prior art publication WO/2009/147050, entitled "method and device for allocating mac addresses in a carrier-current communication network" discloses a method of allocating MAC addresses making it possible to save time during the address allocation phase. This method proposes in particular that a list associating the serial numbers of the devices and the MAC address allocated be stored at the level of the central device for allocating addresses. It is also proposed there that a cataloguing request be sent, serving to allocate the MAC address prior to the sending of a communication frame.

Prior art also includes publications US 2003/0051017 A1 and CN103297849A, which define methods to generate a MAC address 'in place' i.e. on the device that requires the usage of such, in a manner as to best ensure the uniqueness of the MAC address. However, both publications rely either on data that, when considered in a global scope of all possible platforms the invention might be applied to, might not be available on the device utilizing the method or accept the resulting data as invalid and subject to repeated iterations of the process. The present invention attempts to eliminate these disadvantages.

The necessity to acquire an address may be met e.g. while preparing an OSI (e.g. a TCP/IP) capable device to perform in target environment e.g. during manufacturing. The present invention relates in this respect mainly, but not only, to manufacturing sites that prepare the devices for target environment thus connecting all needed components, loading the needed software or needed data. Such preparation may require for the device to acquire a MAC address. However, prior to that acquisition the device has no means to function fully in a TCP/IP or other OSI network which may make the automation of the process of its manufacturing difficult. This is due to it being difficult to control the processes present in this stage with the use of traditional TCP/IP or other OSI networks. Other solutions may be developed, but they do not cooperate well with standard tools used in manufacturing that comply with TCP/IP or other OSI network.

Existing solutions perform well in theory (where models are concerned) and in practice in target environments where the devices that communicate have all necessary components (both hardware and software) installed and necessary data loaded. This data usually includes but may be not limited to a MAC address (as defined by OSI layered model).

It is in transitory environments that the model fails. The present invention relates in this respect mainly to manufacturing sites that prepare the devices for target environment thus connecting all needed components, loading the needed software or needed data. It is difficult to control the processes present at this stage with the use of the traditional OSI model. Other solutions may be developed, but they do not cooperate well with standard tools used in manufacturing that comply with OSI model.

The usage of the word 'manufacturing' or 'production' or 'transitory environment' is in no way limiting to this invention as the environment or processes baring the qualities described herein can be met in other stages of a device's life time or any other environment not inherently connected to a physical communication device.

The aim of the development of the present invention is an improved and effective method and apparatus for MAC address acquisition.

### SUMMARY AND OBJECTS OF THE PRESENT INVENTION

An object to the present invention is a method for MAC address acquisition as well as a method for MAC address assignment, by a server, as defined in the appended claims.

### BRIEF DESCRIPTION OF THE DRAWINGS

These and other objects of the invention presented herein, are accomplished by providing a system and method for MAC address acquisition. Further details and features of the present invention, its nature and various advantages will become more apparent from the following detailed description of the preferred embodiments shown in a drawing, in which:
Fig. 1 presents a diagram of the system according to the present invention;
Fig. 2 presents a diagram of the method, according to the present invention, executed by a client device.

Preferably, the method further comprises the steps of: receiving a notification of an expiry of an association of a MAC address to the client device identifier; and removing the association of a MAC address to the client device identifier.

Preferably, the method further comprises the steps of: in the case the client device identifier is present in the assignment record, updating MAC assignment validity in the assignment record.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

A further object of the present invention is a system for MAC address assignment by a server to at least one network client device characterized in that: the server is configured to operate according to the method of the present invention; and the at least one network client device is configured to operate according to the method of the present invention.

### BRIEF DESCRIPTION OF THE DRAWINGS

These and other objects of the invention presented herein, are accomplished by providing a system and method for MAC address acquisition. Further details and features of the present invention, its nature and various advantages will become more apparent from the following detailed description of the preferred embodiments shown in a drawing, in which:

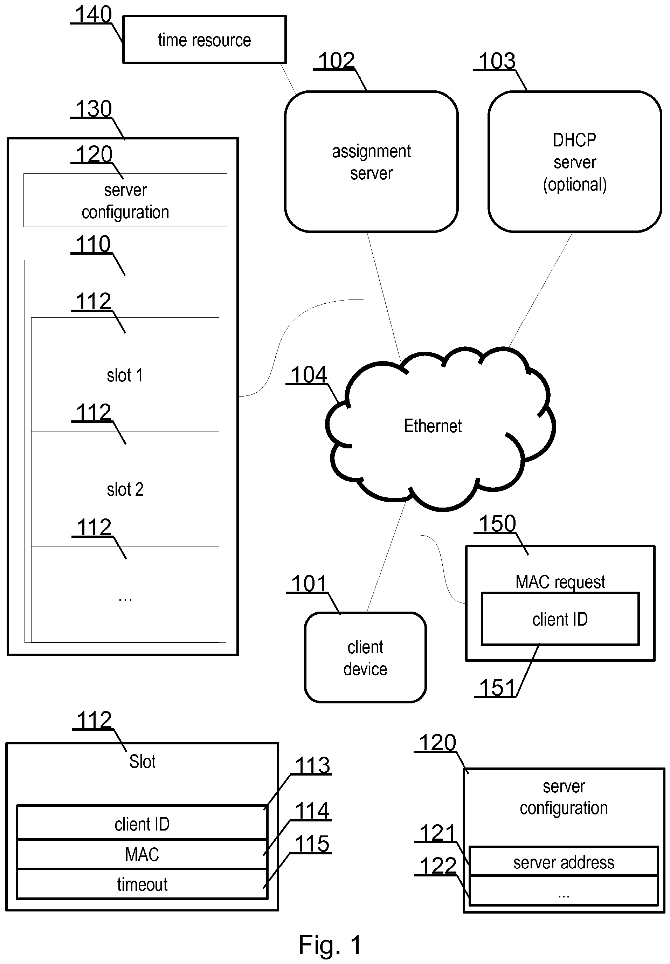

Fig. 1 presents a diagram of the system according to the present invention;

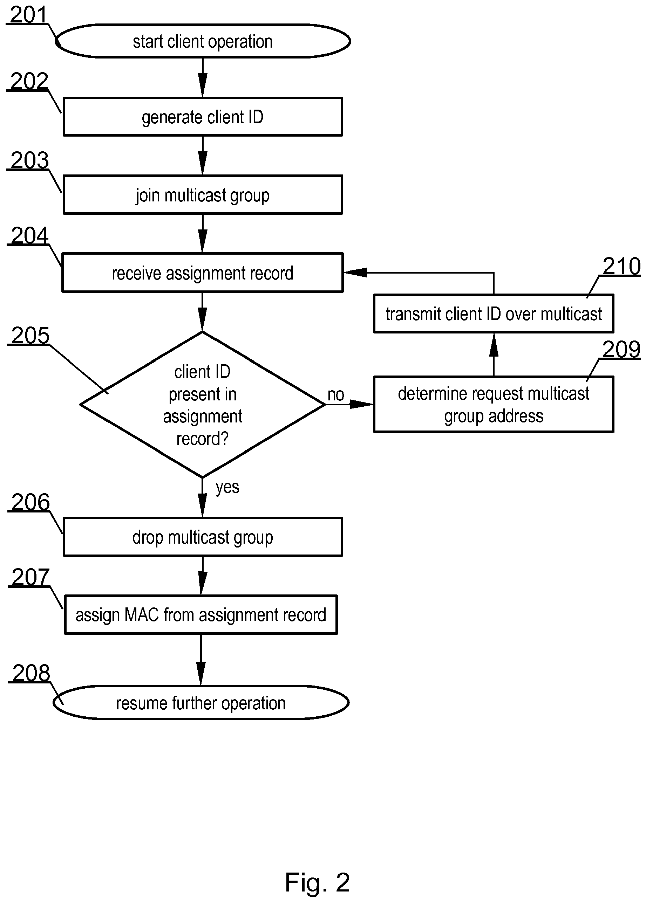

Fig. 2 presents a diagram of the method, according to the present invention, executed by a client device.

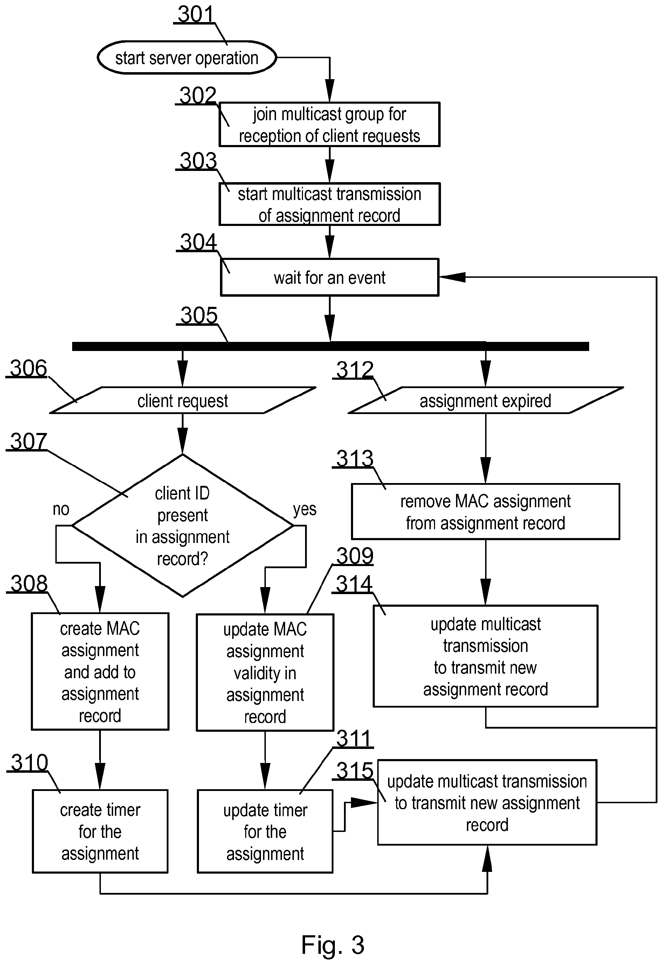

Fig. 3 presents a diagram of the method, according to the present invention, executed by a server device; and

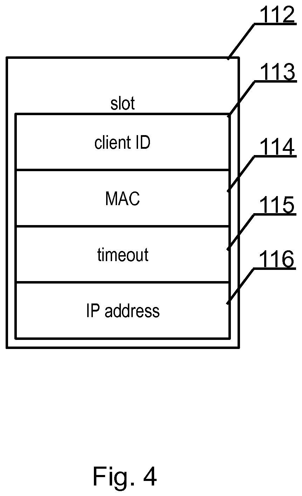

Fig. 4 shows a second example of address assignment structure.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

Fig. 1 presents a diagram of the system according to the present invention. The system includes a client device (101) connected to an Ethernet network (104), which is compliant with the OSI layer model. The client device (101) can be any electronic device that for any reason lacks a MAC address. An exemplary embodiment of such situation comprises a client device (101) e.g. an Ethernet card during a manufacturing process directly after soldering or assembly or SMT (Surface Mount Technology) or the like, but before supplying the client device (101) with its own unique MAC address.

It is in no way limiting, to this invention, whether there is just one client or many. It is also not required that the client device (101) is in the end programmed with a permanent MAC address.

The fact that the client device (101) lacks a fixed MAC address, results in its inability to transmit unicast data in the OSI model, while still allowing it to receive certain kinds of data such as multicast transmission data.

The system may also comprise a DHCP server (103) providing a standard DHCP (Dynamic Host Configuration Protocol) functionality as known from prior art. This server provides IP (Internet Protocol) addresses to client devices (101) present in the network. This is possible only assuming that the client device (101) is supplied with and identified with a unique MAC address.

The system may further comprise a server (102) connected to network (104), which can be a separate machine or embedded in another server's hardware or the like. This server uses multicast packets (that do not require a unique MAC address to operate correctly) in order to deliver a MAC address to each registered client device (101) (device registration is described in the reminder of this specification with reference to a client ID).

The present invention provides a method for generating and managing of the MAC assignment and ensuring that a current configuration is adequate to a current state of the system and is consistent.

For this purpose, the server (102) holds a slots list (110) that comprises a list of slots (112) containing assignments of MAC addresses to each registered client. The server (102) transmits a data record (130) over a multicast protocol at a predefined multicast group address. It is in no way limiting to this invention whether this group address is fixed being the property of the system or dynamically determined or changed periodically or the like.

The data record (130) comprises a server's configuration (120) needed e.g. to provide a reply by the device (101) by means of a multicast address (121) that the server (102) uses to receive multicast data from the devices (101).

It is in no way limiting to this invention whether the configuration comprises the server's address (121) or not or whether this configuration part exists or not. Consequently, the server's address (121) does not need to be configured by the configuration (120), it can be hard-coded in the client devices (101) or a dynamic property, of the client devices (101), or the like. The presence of the server's address (121) in the configuration (120) is merely the preferred approach of this particular embodiment.

The configuration (120) may also comprise other options (122), which does not limit this invention in any way. The data (130) further comprises a slots list (110) comprising all MAC allocations (112) or MAC allocation (112) present at the moment of transmission or any intermediate combination. A single MAC allocation (112) comprises a mapping between a MAC address (114) and a client device's ID (113). The MAC allocation may also comprise a timeout value (115) that suitably defines validity period of the MAC allocation (112).

Since the data record (130) is transmitted over multicast, at a known group address, any client device (101), connected to the network (104), is able to determine whether it is present on the multicast list, its assigned MAC address if any and the validity of that assignment.

The client device (101) may send a request (150) to the server (102). This request (150) can be sent when the slot list does not contain the client ID of the client. In such case, the request (150) is a request for a MAC assignment. The request may have any form, in terms of data/encapsulation, as long as the server unambiguously derives a client device (101) ID from such request.

The request (150) can also be sent after the MAC address of the client (101) is known to the client (101). In such case the request (150) is a request for extension of the validity of the assignment. This request is sent using a multicast protocol to a group address (121) provided in the server configuration (120). It will be evident, to one skilled in the art, that similar functionality can be realized by using a fixed server address rather the address (121).

The present approach offers the client device (101) to be able to use the present invention without prior knowledge of the said address. However, it is in no way limiting to this invention whether the address is taken from configuration (120) or predefined or the like. The MAC address request (150) comprises at the least a client device (101) ID (151), but is not limited to this single field. Based on the MAC address request (150), the server (102) may update the slots list (110) incorporating a new MAC address allocation (112). An example of such update comprises the new client (101) being connected to the network (104). The request (150) further comprises in such case a client ID (151), which does not exist at this point on the slot list (110). The exemplary update in such case comprises extending of the list (110) by one element comprising the received client ID (151) and a newly selected MAC address.

The client device (101) ID (113) and (151), used in the system are identifiers that make it either impossible or very difficult to repeat the same value twice. It is true that it is not always possible to determine such an ID value. However, there exist cases when the client device (101) can use an internal identification present for example on SoC (System on Chip) or one of other chips. An exemplary embodiment of such ID is a 32 bit chipset identification number present in most SoC manufactured by numerous companies. It is clear that such ID cannot be unique, however it is sufficient for the purpose of the described exemplary embodiment of system, as it provides a unique value across all devices (101) that are or can be connected to a given network, subnetwork or a local area network.

An exemplary usage of such value can be found in prior art. If for any reason the use of inherent value of client device (101) is not possible, there exist a number of algorithms that provide means for generation of IDs which assure uniqueness at a reasonably high probability (substantially unique identifier). An exemplary embodiment of such an algorithm is a UUID (Universally Unique Identifier) version 4 (or any other possible to use in a particular case). Due to application of this algorithm, it is possible to reduce the probability of repetition of a client ID to 4E-16. It is clear that this can be construed as unique for the purpose of the present invention.

It is in no way limiting to this invention how the client IDs (113) and (151) are constructed. It is however the preferred approach of the present embodiment, to use UUID version 4 as it assures the same approach across different platforms of the client devices (101) or different networks (104) regardless of any other method of generation of client device (101) ID being available or not.

For determining the validity period of a MAC address allocation (112), the server (102) is equipped or otherwise can use in any manner, a time resource (140). An example embodiment of such time resource (140) can be a real time clock.

It is in no way limiting to this invention, whether the time provided by the time resource (140) is a real time representation or a number of epochs of any kind or a number of actions or changes of any kind or the like.

It is in no way limiting to this invention if the time resource (140) is used for other purposes as well. The validity period of a MAC allocation (112) is determined by reading the time resource (140) and comparing the read value to the timeout value (115). The use of word 'comparing' is in no way limiting to this invention, but rather serves as an exemplary embodiment only, this can in fact be any operation resulting in determination whether the MAC assignment (112) is valid or not.

It is in no way limiting to the present invention if the time resource (140) does not exist or is not used or whether the validity period of the MAC allocation (112) is indefinite. An exemplary use of such could comprise a permanent MAC address assignment in a manufacturing environment.

It is in no way limiting to the present invention if the DHCP server (103) is used or omitted. The acquisition of an IP address via the DHCP protocol may be a consequence of the present invention and the present embodiment includes the DHCP server (103) for a clear designation of purpose and depiction of a particular use case.

Fig. 2 presents a diagram of the method, according to the present invention, executed by a client device. The embodiment comprises clients connecting to a network and a server managing addressing in the network. It is a preferred approach of this embodiment of the present invention, that the system be constructed as described with reference to Fig.1.

Fig. 2 depicts an exemplary embodiment of the present invention with an exemplary process flow of a client connecting to a network, where MAC addressing is managed by an embodiment of the present invention.

The interaction of a client and a server begins with the client booting up i.e. starting to operate at step (201). The client generates a client device (101) ID (e.g. a Universally Unique Identifier) upon start in step (202)).

An exemplary embodiment of the usage of a Universally Unique Identifier by the client device (101) may comprise generation of a new Universally Unique Identifier upon each start (e.g. power on) of the client device (101). Such approach would allow for detection of device restart or malfunction or the like. Another exemplary embodiment of the usage of a Universally Unique Identifier by the client device (101) may comprise generation of a new Universally Unique Identifier only upon the first start (e.g. power on) of the client device (101) and reusing its value on every subsequent start. Such approach would allow to keep the identification of a client persistent during the whole life time of the client device (101). It is therefore evident, from the aforementioned examples, that the moment or persistency or specifics of the algorithm or the like of generation of the client device (101) identifier are not limiting to the present invention in any way.

Next, the client device (101) joins a predefined multicast group at step (203). Since the server (102) transmits the assignment record constantly, the client device (101) is able to receive the assignment record at step (204). It is a preferred approach, of the present embodiment, that the assignment record is constructed as described in the present invention in system, item (130). This reference is assumed in the present embodiment for clarity of the description.

The multicast transmission of the server (102) may be periodically stopped for optimization purposes e.g. at times when the server is able to deduce that there are not any client devices (101) connected to the multicast group or the transmission can be cut by the hardware e.g. a switch capable of optimized support for multicast group management or the like. It is therefore in no way limiting to the present invention, whether the client actually receives the assignment record (130) at step (204) or due to a timeout, lack of data or the like, determines there is no record transmitted. The latter simply provides it with a conclusion identical to receiving the assignment record (130) and checking that its client device (101) ID is not present in the assignment record (130) at step (205) moving it to step (209).

Therefore, if it is determined, at step (205) of the procedure, that the client device (101) ID of the client is not present in the assignment record, the client device (101) moves on to step (209). At step (209), the multicast group address of the client request is determined. Similarly to the exemplary system of the present invention, it is in no way limiting to the present invention how this address is determined i.e. whether it is taken from a configuration included in the assignment record (130) or hard-coded or the like.

The client device (101) ID is next transmitted to the determined multicast group at step (210). This transmission can be either synchronous and sustained only for a period of time or asynchronous and stopped later on any condition selected by an embodiment of the present invention. It is therefore in no way limiting to the present invention, how the transmission at step (210) is managed. The client device (101) then moves back to step (204) in order to receive the assignment record (130) again.

If it is determined at step (205) that the client ID is present in the assignment record, then the client drops the multicast group membership at step (206) as it is no longer needed to receive the assignment record. Next, the client device (101) assigns the MAC address, contained in the received assignment record and connected to its client device (101) ID, to the respective interface at step (207) and resumes further operation at step (208) of the procedure. The assigned MAC address may be used for further network transmission as known in the prior art.

The operation of the server (102) is depicted in Fig. 3. This method facilitates MAC address assignment by a server to at least one network client device.

The server (102) starts its operation at step (301) and joins a defined multicast group at step (302), thus listening to client devices' (101) requests comprising a client device (101) identifier. Next, the server (102) starts the multicast transmission (303) of the assignment record (130). Subsequently, the server (102) starts listening for events at step (304). Two types of such events may occur as described below.

A client device (101) request, comprising client device (101) identifier, may arrive at step (306) of the process. In such case, the server (102) determines at step (307) whether the client device (101) ID, received in the request, is already present in the assignment record (130). In the case the client device (101) ID is not present in the assignment record (130), the server (102) creates a new assignment of a MAC address to a client device (101) ID and adds it at step (308) to the assignment record (130).

Subsequently, a timer is created at step (310), in order to measure (or otherwise unambiguously indicate) the validity time of the assignment. In the case the client device (101) ID is already present in the assignment record (130), the server (102) updates the validity time of the assignment at step (309) and updates the time of that assignment to include the new validity time at step (311). Next, with the assignment record up to date, the server (102) updates at step (315) the multicast transmission of the assignment record (130) so that client devices (101) may receive the updated information from this point forth. The server (102) then moves back to waiting for events at step (304) of the procedure.

While waiting for events (304), an assignment may expire at step (312). This is triggered by the respective timer that was created by the server at step (310). In such case, the server removes the MAC assignment from the assignment record (130) at step (313). Next, with the assignment record up to date, the server (102) updates, at step (314), the multicast transmission of the assignment record (130) so that client devices (101) can receive the updated information from this point forth. The server (102) then moves back to waiting for events at step (304) of the procedure.

The sequence of the steps depicted in the exemplary embodiments depicted in Fig.2 and Fig.3, of the present invention, is not arbitrary and some of them may be executed before others in a different order then depicted keeping the integrity of the method described by the exemplary system.

It is beyond the scope of the present invention how the client behaves after assignment of the address i.e. at and after step (208). For example, the client device (101) may further use the obtained MAC address in order to utilize a DHCP protocol to obtain an IP address or other network options.

It is further a result, of the present invention, that not only MAC addresses, as defined by the OSI layered model (e.g. TCP/IP network), can be obtained using the method described in the present invention, but any type of address or value or the like, whose lack does not prohibit the described mechanisms from operating as outlined above.

In another embodiment of the present invention, the data structures described herein may be extended to contain IP addresses to be assigned by the same mechanism or furthermore by the same data that is used for MAC address assignment, thus eliminating in some cases the need to use a DHCP server or the like, in order to complete the process of acquisition of an IP address for the OSI Network (3) layer. An exemplary embodiment of such extension is depicted in Fig.4. adding an IP address (116) field to the previously defined slot (112) in the exemplary system of the present invention.

In an application in Internet of Things (IoT) concept, an implementation of the present system per customer premises may be presented. Devices, present at the customer premises do not have fixed MAC addresses and the customer premises server has a pool of MAC addresses that may be used, by the user devices, in order to communicate with an external network (fixed addresses from a pool of official MAC addresses valid and unique in the external network). Each device requiring a network connection obtains a MAC address from the server. Typically not all user devices will be active at any time instant, therefore pooling of MAC addresses will provide network connectivity with a limited pool of addresses.

The present invention eliminates all problems, of the prior art referenced, and described in the present invention. The present invention also provides a generic solution that is possible to implement on almost every platform compliant with the OSI layered network model. Further, the present invention also provides a method that is independent of the inherent qualities of the platform it is operating on e.g. chip identification information or the like. The present invention also guarantees uniqueness of the assigned addressing regardless of the quantity of the devices connected to the network or timings of the processes described or the results of these processes or the like. Therefore, the invention provides a useful, concrete and tangible result.

Applications of the present invention involve acquisition of network addresses applicable in any network-connectable device. The network addresses are suitable processed and applied, thus the machine or transformation test is fulfilled and the idea is not abstract.

It can be easily recognized, by one skilled in the art, that the aforementioned method for MAC address acquisition may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for MAC address acquisition in a network client device, comprising
the steps of:
• generating (202) a client device (101) identifier using a method that makes it a substantially unique identifier, wherein said substantially unique identifier is a unique value across all devices (101) that are or can be connected to a given network;
• joining (203) a predefined multicast group at a given address;
• receiving (204), using the predefined multicast group address, an assignment record (130) comprising at least one MAC address associated with a client device (101) identifier;
• determining (205) whether the client device (101) identifier is present in the assignment record (130) and if it is present, assigning (207), to the client device (101), the MAC address associated with the client device (101) identifier by means of the received assignment record (130);
• otherwise, when the client device (101) identifier is not present in the assignment record (130),
∘ transmitting (210) the client device (101) identifier over a multicast transmission in a MAC address request in order to obtain a MAC address assignment to said client device (101) identifier;
∘ returning to the receiving step (204).

2. The method according to claim 1 **characterized in that** the method further comprises a step of using the assigned MAC address for further network transmission.

3. The method according to claim 1 **characterized in that** the assignment record further comprises a timeout value (115) that suitably defines validity period of each MAC address allocation (112).

4. The method according to claim 1 **characterized in that** the substantially unique identifier is a Universally Unique Identifier.

5. A computer program comprising program code means for performing all the steps of the computer-implemented method according to claim 1 when said program is run on a computer.

6. A computer readable medium storing computer-executable instructions performing all the steps of the computer-implemented method according to claim 1 when executed on a computer.

7. Method for MAC address assignment by a server to at least one network client comprising the steps of:
• joining (302) a defined multicast group and starting listening to client devices' (101) requests comprising a client device (101) identifier;
• starting (303) a multicast transmission of an assignment record (130) comprising at least one MAC address associated with a client device (101) identifier;
• receiving (306) a request from a client device (101) the request comprising client device (101) identifier;
• determining (307) whether the client device (101) identifier is already present in the assignment record (130);
• in the case the client device (101) identifier is not present in the assignment record (130), creating a new association of a MAC address to the client device (101) identifier and adding (308) the association to the assignment record (130);
• executing (315) the multicast transmission of the updated assignment record (130).

8. The method according to claim 8 **characterized in that** the method further comprises a step of creating (310) a validity time value in order to indicate validity time of the new association of a MAC address to the client device (101) identifier.

9. The method according to claim 8 **characterized in that** the method further comprises the steps of:
• receiving a notification of an expiry of an association of a MAC address to the client device (101) identifier; and
• removing (313) the association of a MAC address to the client device (101) identifier.

10. The method according to claim 8 **characterized in that** the method further comprises the steps of: in the case the client device (101) identifier is present in the assignment record (130), updating MAC assignment validity (309) in the assignment record (130).

11. A computer program comprising program code means for performing all the steps of the computer-implemented method according to claim 7 when said program is run on a computer.

12. A computer readable medium storing computer-executable instructions performing all the steps of the computer-implemented method according to claim 7 when executed on a computer.

13. System for MAC address assignment by a server (102) to at least one network client device (101) **characterized in that**:
• the server (102) is configured to operate according to the method of claim 7; and
• the at least one network client device (101) is configured to operate according to the method of claim 1.

## Patentansprüche

1. Verfahren zur MAC-Adresserfassung in einem Netzwerk-Clientgerät, das die folgenden Schritte umfasst:
• Erzeugen (202) eines Clientgeräte-(101)-Bezeichners unter Verwendung eines Verfahrens, das ihn zu einem im Wesentlichen einzigartigen Bezeichner macht, wobei der im Wesentlichen einzigartige Bezeichner ein einzigartiger Wert auf allen Geräten (101) ist, die mit einem gegebenen Netzwerk verbunden sind oder verbunden werden können;
• Beitreten (203) einer vordefinierten Multicastgruppe an einer gegebenen Adresse;
• Empfangen (204) eines Zuweisungseintrags (130), der mindestens eine MAC-Adresse umfasst, die einem Clientgeräte-(101)-Bezeichner zugeordnet ist, unter Verwendung der vordefinierten Multicastgruppenadresse;
• Bestimmen (205), ob der Clientgeräte-(101)-Bezeichner im Zuweisungseintrag (130) vorhanden ist, und wenn er vorhanden ist, Zuweisen (207) dem Clientgerät (101) der MAC-Adresse, die dem Clientgeräte-(101)-Bezeichner über den empfangenen Zuweisungseintrag (130) zugeordnet wird;
• andernfalls, wenn der Clientgeräte-(101)-Bezeichner nicht im Zuweisungseintrag (130) vorhanden ist,
∘ Übertragen (210) des Clientgeräte-(101)-Bezeichners über eine Multicastübertragung in eine MAC-Adressanfrage, um eine MAC-Adressenzuweisung zum Clientgeräte-(101)-Bezeichner zu erhalten;
∘ Rückkehren zum empfangenden Schritt (204).

2. Verfahren nach Anspruch 1, **dadurch gekennzeichnet, dass** das Verfahren ferner einen Schritt der Verwendung der zugewiesenen MAC-Adresse für weitere Netzwerkübertragung umfasst.

3. Verfahren nach Anspruch 1, **dadurch gekennzeichnet, dass** der Zuweisungseintrag ferner einen Zeitüberschreitungswert (115) umfasst, der in geeigneter Weise eine Gültigkeitsdauer jeder MAC-Adressvergabe (112) definiert.

4. Verfahren nach Anspruch 1, **dadurch gekennzeichnet, dass** der im Wesentlichen einzigartige Bezeichner ein universeller einzigartiger Bezeichner ist.

5. Computerprogramm, das Programmcodemittel 1 umfasst, um all die Schritte des computerimplementierten Verfahrens nach Anspruch 1 durchzuführen, wenn das Programm auf einem Computer läuft.

6. Computerlesbares Medium, das computerausführbare Anweisungen speichert, die all die Schritte des computerimplementierten Verfahrens nach Anspruch 1 durchführen, wenn sie auf einem Computer ausgeführt werden.

7. Verfahren zur MAC-Adressenzuweisung durch einen Server zu mindestens einem Netzwerk-Client, das die folgenden Schritte umfasst:
• Beitreten (302) einer definierten Multicastgruppe und Beginnen des Abhörens von Clientgeräte-(101)-Anfragen, die einen Clientgeräte-(101)-Bezeichner umfassen;
• Beginnen (303) einer Multicastübertragung eines Zuweisungseintrags (130), der mindestens eine MAC-Adresse umfasst, die einem Clientgeräte-(101)-Bezeichner zugeordnet ist;
• Empfangen (306) einer Anfrage von einem Clientgerät (101), wobei die Anfrage Clientgeräte-(101)-Bezeichner umfasst;
• Bestimmen (307), ob der Clientgeräte-(101)-Bezeichner im Zuweisungseintrag (130) bereits vorhanden ist;
• im Fall, dass der Clientgeräte-(101)-Bezeichner nicht im Zuweisungseintrag (130) vorhanden ist, Erzeugen einer neuen Zuordnung einer MAC-Adresse zum Clientgeräte-(101)-Bezeichner und Hinzufügen (308) der Zuordnung zum Zuweisungseintrag (130);
• Ausführen (315) der Multicastübertragung des aktualisierten Zuweisungseintrags (130).

8. Verfahren nach Anspruch 8, **dadurch gekennzeichnet, dass** das Verfahren ferner einen Schritt des Erzeugens (310) eines Gültigkeitsdauerwerts umfasst, um eine Gültigkeitsdauer der neuen Zuordnung einer MAC-Adresse zum Clientgeräte-(101)-Bezeichner anzuzeigen.

9. Verfahren nach Anspruch 8, **dadurch gekennzeichnet, dass** das Verfahren ferner die folgenden Schritte umfasst:
• Empfangen einer Benachrichtigung eines Ablaufs einer Zuordnung einer MAC-Adresse zum Clientgeräte-(101)-Bezeichner; und
• Entfernen (313) der Zuordnung einer MAC-Adresse zum Clientgeräte-(101)-Bezeichner.

10. Verfahren nach Anspruch 8, **dadurch gekennzeichnet, dass** das Verfahren ferner die folgenden Schritte umfasst: im Fall, dass der Clientgeräte-(101)-Bezeichner im Zuweisungseintrag (130) vorhanden ist, Aktualisieren der MAC-Zuweisungsgültigkeit (309) im Zuweisungseintrag (130).

11. Computerprogramm, das Programmcodemittel 1 umfasst, um all die Schritte des computerimplementierten Verfahrens nach Anspruch 7 durchzuführen, wenn das Programm auf einem Computer läuft.

12. Computerlesbares Medium, das computerausführbare Anweisungen speichert, die all die Schritte des computerimplementierten Verfahrens nach Anspruch 7 durchrühren, wenn sie auf einem Computer ausgeführt werden.

13. System zur MAC-Adressenzuweisung durch einen Server (102) zu mindestens einem Netzwerk-Clientgerät (101), **dadurch gekennzeichnet, dass**:
• der Server (102) konfiguriert ist, um gemäß dem Verfahren nach Anspruch 7 betrieben zu werden; und
• das mindestens eine Netzwerk-Clientgerät (101) konfiguriert ist, um gemäß dem Verfahren nach Anspruch 1 betrieben zu werden.

## Revendications

1. Procédé d'acquisition d'adresse MAC dans un dispositif client en réseau, comprenant les étapes de :
• génération (202) d'un identifiant de dispositif client (101) à l'aide d'un procédé qui rend cet identifiant sensiblement unique, ledit identifiant sensiblement unique étant une valeur unique à travers tous les dispositifs (101) qui sont ou peuvent être connectés à un réseau donné ;
• adhésion (203) à un groupe de multidiffusion prédéfini à une adresse donnée ;
• réception (204), à l'aide de l'adresse de groupe de multidiffusion prédéfini, d'un enregistrement d'attribution (130) comprenant au moins une adresse MAC associée à un identifiant de dispositif client (101) ;
• détermination (205) pour savoir si l'identifiant de dispositif client (101) est présent dans l'enregistrement d'attribution (130) et s'il est présent, attribution (207), au dispositif client (101), de l'adresse MAC associée à l'identifiant de dispositif client (101) au moyen de l'enregistrement d'attribution reçu (130) ;
• sinon, lorsque l'identifiant de dispositif client (101) n'est pas présent dans l'enregistrement d'attribution (130),
∘ transmission (210) de l'identifiant de dispositif client (101) lors d'une transmission de multidiffusion d'une demande d'adresse MAC afin d'obtenir une attribution d'adresse MAC dudit identifiant de dispositif client (101) ;
∘ retour à l'étape de réception (204).

2. Procédé selon la revendication 1, **caractérisé en ce que** ledit procédé comprend en outre une étape d'utilisation de l'adresse MAC attribuée pour une transmission de réseau ultérieure.

3. Procédé selon la revendication 1, **caractérisée en ce que** l'enregistrement d'attribution comprend en outre une valeur d'expiration (115) qui définit convenablement la période de validité de chaque attribution d'adresse MAC (112).

4. Procédé selon la revendication 1, **caractérisé en ce que** l'identifiant sensiblement unique est un identifiant universel unique.

5. Programme informatique comprenant un moyen de code de programme permettant d'effectuer toutes les étapes du procédé mis en oeuvre par ordinateur selon la revendication 1 lorsque ledit programme est exécuté sur un ordinateur.

6. Support lisible par ordinateur stockant des instructions exécutables par ordinateur effectuant toutes les étapes du procédé mis en oeuvre par ordinateur selon la revendication 1 lorsqu'elles sont exécutées sur un ordinateur.

7. Procédé permettant l'attribution d'adresse MAC par un serveur à au moins un client en réseau comprenant les étapes de :
• adhésion (302) à un groupe de multidiffusion défini et démarrage de l'écoute des demandes de dispositifs clients (101) comprenant un identifiant de dispositif client (101) ;
• démarrage (303) d'une transmission de multidiffusion d'un enregistrement d'attribution (130) comprenant au moins une adresse MAC associée à un identifiant de dispositif client (101) ;
• réception (306) d'une demande provenant d'un dispositif client (101), ladite demande comprenant un identifiant de dispositif client (101) ;
• détermination (307) pour savoir si l'identifiant de dispositif client (101) est déjà présent dans l'enregistrement d'attribution (130) ;
• dans le cas où l'identifiant de dispositif client (101) n'est pas présent dans l'enregistrement d'attribution (130), création d'une nouvelle association d'une adresse MAC à l'identifiant de dispositif client (101) et ajout (308) de l'association à l'enregistrement d'attribution (130) ;
• exécution (315) de la transmission de multidiffusion de l'enregistrement d'attribution mis à jour (130).

8. Procédé selon la revendication 8, **caractérisé en ce que** ledit procédé comprend en outre une étape de création (310) d'une valeur de durée de validité afin d'indiquer la durée de validité de la nouvelle association d'une adresse MAC à l'identifiant de dispositif client (101).

9. Procédé selon la revendication 8, **caractérisé en ce que** ledit procédé comprend en outre les étapes de :
• réception d'une notification d'une expiration d'une association d'une adresse MAC à l'identifiant de dispositif client (101) ; et
• retrait (313) de l'association d'une adresse MAC à l'identifiant de dispositif client (101).

10. Procédé selon la revendication 8, **caractérisé en ce que** ledit procédé comprend en outre les étapes de : dans le cas de l'identifiant de dispositif client (101) présent dans l'enregistrement d'attribution (130), mise à jour de la validité d'attribution MAC (309) dans l'enregistrement d'attribution (130).

11. Programme informatique comprenant un moyen de code de programme permettant d'effectuer toutes les étapes du procédé mis en oeuvre par ordinateur selon la revendication 7 lorsque ledit programme est exécuté sur un ordinateur.

12. Support lisible par ordinateur stockant des instructions exécutables par ordinateur effectuant toutes les étapes du procédé mis en oeuvre par ordinateur selon la revendication 7 lorsqu'elles sont exécutées sur un ordinateur.

13. Système destiné à l'attribution d'adresse MAC par un serveur (102) à au moins un dispositif client en réseau (101) **caractérisé en ce que** :
• le serveur (102) est configuré pour fonctionner selon le procédé de la revendication 7 ; et
• le au moins un dispositif client en réseau (101) est configuré pour fonctionner selon le procédé de la revendication 1.
